# EUROPEAN PATENT APPLICATION

(11) **EP 1 662 766 A1**
(43) Date of publication of application: **31.05.2006**
(21) Application number: 05024920.0
(22) Date of filing: 15.11.2005
(51) Int. Cl.: H04M 3/56

(54) **Easy volume adjustment for communication terminal in multipoint conference**

(30) Priority: 24.11.2004 JP 2004339565
(71) Applicant: NEC CORPORATION, Minato-ku, Tokyo 108-8001 (JP)
(72) Inventor: Takeshima, Ryouta, NEC Corporation, Tokyo 108-8001 (JP); Dei, Hiroaki, NEC Corporation, Tokyo 108-8001 (JP); Ozawa, Kazunori, NEC Corporation, Tokyo 108-8001 (JP)
(74) Representative: Vossius & Partner

(57) **Abstract**

A transit control apparatus connects a plurality of terminals participating in a multipoint conference to each other for relaying and controlling speech data. A terminal connected to the transit control apparatus transmits speech data. A DTMF signal extracting instruction decoder extracts a DTMF signal from the speech data transmitted from the terminal, and decodes the extracted DTMF signal into an instruction. A mixer adjusts the volume level of the speech data based on the instruction, and outputs the adjusted speech data.

## Description

The present invention relates to a transit control apparatus, a multipoint conference system, and a multipoint conference method for use in a multipoint conference which is conducted between a plurality of terminals that are present at many sites and interconnected by wireless or wired links.

In recent years, networks have become faster because of ADSL and optical communications. The faster networks allow bidirectional communication systems and conference systems to find widespread use quickly based on technologies known as VolP (Voice over IP) and TVolP (TV over IP) by which packetized images and encoded audio data are transmitted through those networks. Based on the faster networks, furthermore, conventional multipoint conference systems which are constructed of a plurality of dedicated terminals are changing to multipoint conference systems which employ personal computers as terminals.

The third-generation cellular phone begins to employ cellular phone terminals which support TV telephone according to the circuit switching (CS) system. There are gateways for connecting these cellular phone terminals to TVoIP clients which are connected to IP networks. Based on these technologies, cellular phone terminals have been finding use in multipoint conference systems.

In multipoint conference systems, it is important to be able to adjust the volume of a sound output from each of the terminals that participate in a multipoint conference. A method of adjusting the volume of terminal output a sound is disclosed in JP-A-1993-48747 and JP-A-1998-136101, for example.

The multipoint conference apparatus disclosed in the above publications allow each conference participant to adjust the volume of speech of another conference participant and hear the adjusted volume in a multipoint conference system. To make the volume adjustment possible, each of the terminals has a means for adjusting the volume level of speech from each of other terminals to a desired volume level, and a means for sending information representative of the adjusted volume level to a multipoint conference controller. Based on the information representative of the adjusted volume level from each of the terminals, the multipoint conference controller adjusts the volume levels of speech signals received from the other terminals and transmits the speech signals at the adjusted volume levels to each of the terminals.

There is also known a method of sending a DTMF (Dial Tone Multi-Frequency) signal representing an instruction to adjust the volume level of a speech signal to be transmitted from a terminal to another terminal, and transmitting a speech signal at the adjusted volume level from the other terminal, as disclosed in JP-A-1997-191220 and JP-A-2002-368866, for example.

The method disclosed in JP-A-1993-48747 and JP-A-1998-136101 suffers a problem in that each of the terminals participating in a multipoint conference has to have a special function or device for generating a volume adjustment signal.

The method disclosed in JP-A-1997-191220 and JP-A-2002-368866 needs to add a function to detect a DTMF signal to each of the terminals. The method is also disadvantageous in that each of the terminals is unable to adjust the volume level of its own speech signal transmitted therefrom.

According to the above methods, the volume level adjusted by each of the terminals is not recognized on its own terminal. For example, when a terminal is set to a mute mode, the user of the terminal does not recognize the mute mode, and any speech made by the user is not delivered to the other terminals.

It is an object of the present invention to provide a transit control apparatus, a multipoint conference system, and a multipoint conference method which allow each terminal to send a speech signal at a suitable volume level and to receive a speech signal at a suitable volume level from other terminals through easy volume adjustment in a multipoint conference, and which allows each terminal to confirm an adjusted volume level thereon.

According the present invention, there is provided a transit control apparatus which connects a plurality of terminals participating in a multipoint conference to each other for relaying and controlling speech data. A DTMF signal is extracted from speech data transmitted from a speech. The extracted DTMF signal is decoded into an instruction. The volume level of the speech data is adjusted based on the decoded instruction.

Thus, the volume level of speech data of a terminal participating in a multipoint conference can be adjusted without the need for any special function to be added to the terminal.

The above and other objects, features, and advantages of the present invention will become apparent from the following description with reference to the accompanying drawings which illustrate examples of the present invention.
Fig. 1 is a block diagram of a multipoint conference system according to an embodiment of the present invention;
Fig. 2 is a block diagram of a transit control apparatus according to a first embodiment in the multipoint conference system shown in Fig. 1;
Fig. 3 is a block diagram of a DTMF signal extracting instruction decoder in the transit control apparatus shown in Fig. 2;
Fig. 4 is a block diagram of a mixer in the transit control apparatus shown in Fig. 2;
Fig. 5 is a block diagram of an instruction processor in the mixer shown in Fig. 4;
Fig. 6 is a flowchart of a multipoint conference method performed by the multipoint conference system shown in Figs. 1 through 5;
Fig. 7 is a block diagram of a transit control apparatus according to a second embodiment for use in the multipoint conference system shown in Fig. 1;
Fig. 8 is a block diagram of a speech detecting processor in the transit control apparatus shown in Fig. 7;
Fig. 9 is a flowchart of a multipoint conference method performed by the multipoint conference system shown in Fig. 1 which incorporates the transit control apparatus shown in Figs. 7 and 8;
Fig. 10 is a block diagram of a transit control apparatus according to a third embodiment for use in the multipoint conference system shown in Fig. 1;
Fig. 11 is a block diagram of a speech recognition instruction decoder in the transit control apparatus shown in Fig. 10;
Fig. 12 is a flowchart of a multipoint conference method performed by the multipoint conference system shown in Fig. 1 which incorporates the transit control apparatus shown in Figs. 10 and 11;
Fig. 13 is a block diagram of a transit control apparatus according to a fourth embodiment for use in the multipoint conference system shown in Fig. 1;
Fig. 14 is a block diagram of a volume detecting processor in the transit control apparatus shown in Fig. 13;
Fig. 15 is a flowchart of a multipoint conference method performed by the multipoint conference system shown in Fig. 1 which incorporates the transit control apparatus shown in Figs. 13 and 14;
Fig. 16 is a block diagram of a transit control apparatus according to a fifth embodiment for use in the multipoint conference system shown in Fig. 1;
Fig. 17 is a flowchart of a multipoint conference method performed by the multipoint conference system shown in Fig. 1 which incorporates the transit control apparatus shown in Fig. 16;
Fig. 18 is a block diagram of a mixer in a transit control apparatus according to a sixth embodiment for use in the multipoint conference system shown in Figs. 1 and 2;
Fig. 19 is a flowchart of a multipoint conference method performed by the multipoint conference system shown in Figs. 1 and 2 which incorporates the mixer shown in Fig. 18; and
Fig. 20 is a flowchart of a processing sequence for determining a method of indicating an adjusted volume level, performed by a controller in the transit control apparatus shown in Fig. 2.

### 1st Embodiment:

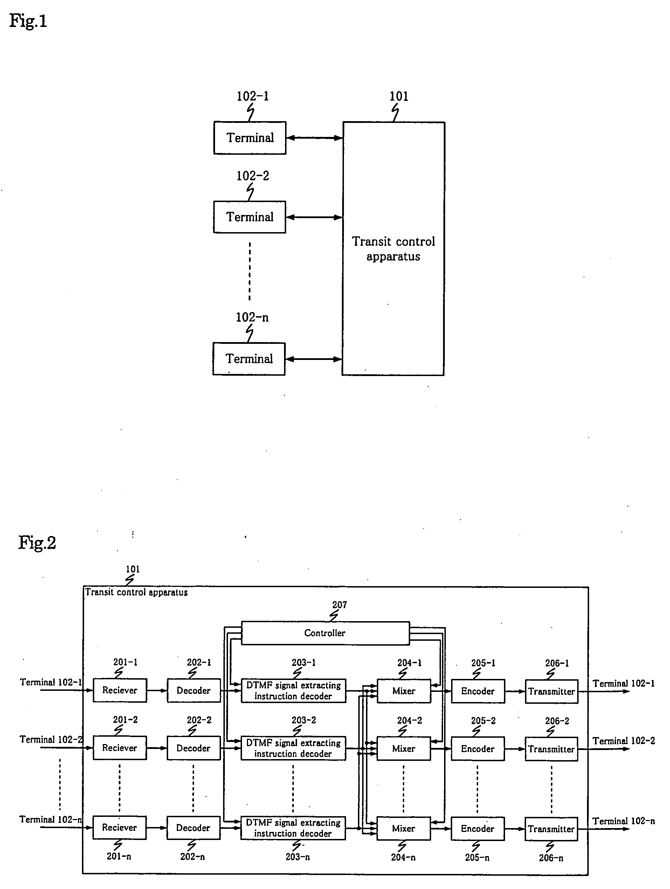

Fig. 1 shows a multipoint conference system comprising transit control apparatus 101 and a plurality of terminals 102-1 through 102-n connected to each other through transit control apparatus 101. Each of terminals 102-1 through 102-n can participate in a multipoint conference conducted through the multipoint conference system.

As shown in Fig. 2, transit control apparatus 101 illustrated in Fig. 1 comprises a plurality of receivers 201-1 through 201-n, a plurality of decoders 202-1 through 202-n, a plurality of DTMF signal extracting instruction decoders 203-1 through 203-n, a plurality of mixers 204-1 through 204-n, a plurality of encoders 205-1 through 205-n, a plurality of transmitters 206-1 through 206-n, and controller 207.

Receivers 201-1 through 201-n receive speech stream signals from respective terminals 102-1 through 102-n and output the received speech stream signals. Decoders 202-1 through 202-n decode the speech stream signals output from receivers 201-1 through 201-n into respective internal input signals to be processed in transit control apparatus 101, and output the internal input signals. DTMF signal extracting instruction decoders 203-1 through 203-n extract DTMF signals from the internal input signals output from decoders 202-1 through 202-n, dividing the internal input signals into the DTMF signals and speech data, decode the detected DTMF signals into instruction signals, and output the instruction signals. Mixers 204-1 through 204-n adjust the volume levels of the speech data from the respective terminals based on the instruction signals output from DTMF signal extracting instruction decoders 203-1 through 203-n, and output the speech data at the adjusted volume levels as internal output signals. Encoders 205-1 through 205-n convert the internal output signals output from mixers 204-1 through 204-n into speech stream signals, and outputs the speech stream signals. Transmitters 206-1 through 206-n are supplied with the speech stream signals from encoders 205-1 through 205-n, and transmit the speech stream signals to respective terminals 102-1 through 102-n.

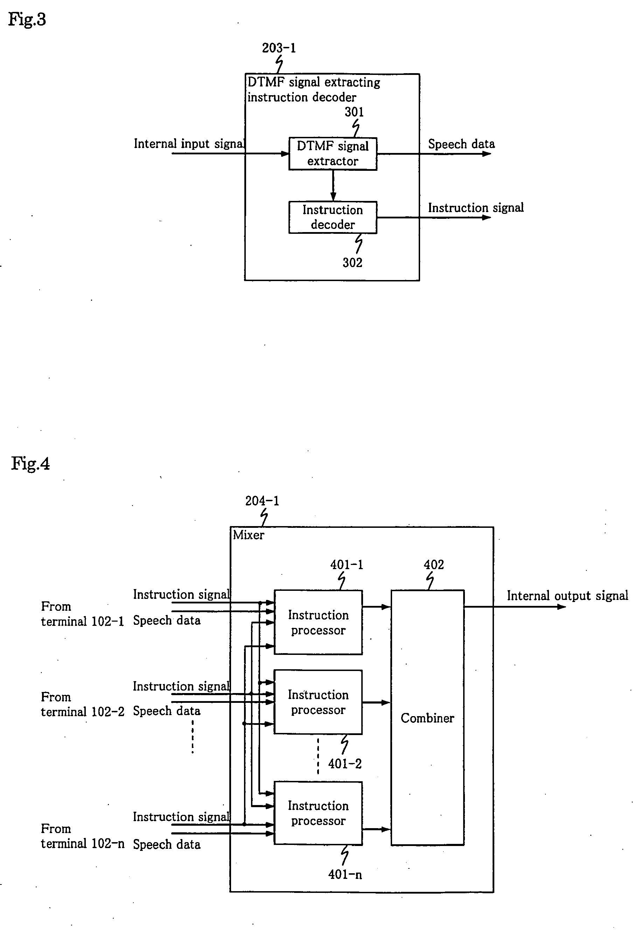

As shown in Fig. 3, DTMF signal extracting instruction decoder 203-1 illustrated in Fig. 2 comprises DTMF signal extractor 301 and instruction decoder 302. DTMF signal extractor 301 detects a DTMF signal from an internal input signal output from decoder 202-1, and outputs the detected DTMF signal and speech data separately from each other. Instruction decoder 302 decodes an instruction of the DTMF signal output from DTMF signal extractor 301 into an instruction signal, and outputs the instruction signal. DTMF signal extracting instruction decoders 203-2 through 203-n are structurally and functionally identical to DTMF signal extracting instruction decoder 203-1.

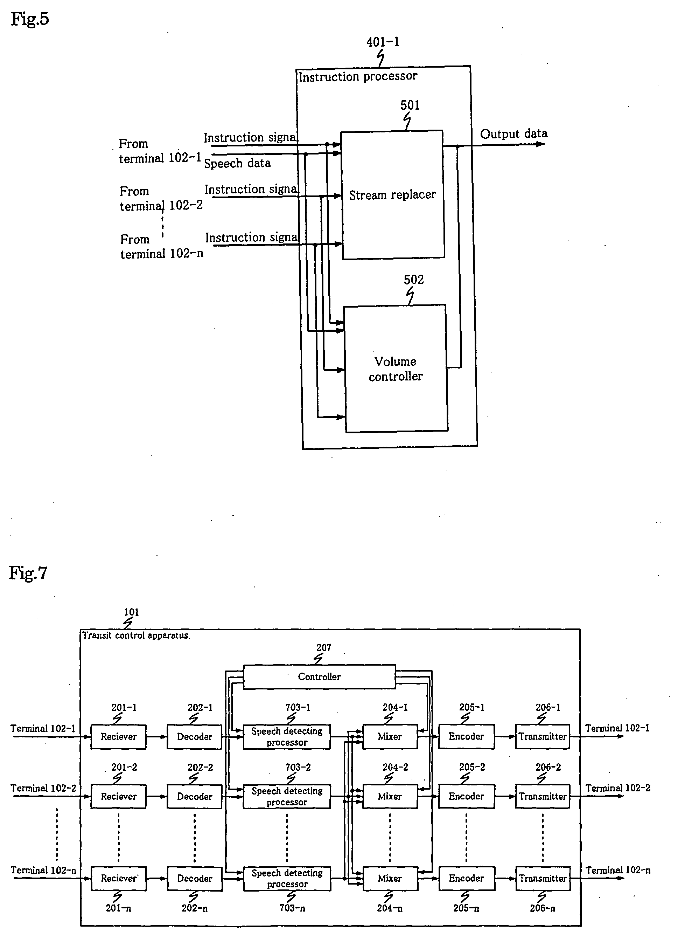

As shown in Fig. 4, mixer 204-1 illustrated in Fig. 2 comprises a plurality of instruction processors 401-1 through 401-n and combiner 402. Instruction processors 401-1 through 401-n adjust the volume levels of speech data of the respective terminals according to the instruction signals output from respective DTMF signal extracting instruction decoders 203-1 through 203-n in transit control apparatus 101 shown in Fig. 2, and output the adjusted speech data. Combiner 402 combines the speech data output from instruction processors 401-1 through 401-n into an internal output signal, and outputs the internal output signal. Mixers 204-2 through 204-n are structurally and functionally identical to mixer 204-1.

As shown in Fig. 5, instruction processor 401-1 illustrated in Fig. 4 comprises stream replacer 501 and volume controller 502. Stream replacer 501 is supplied with the instruction signals output from DTMF signal extracting instruction decoders 203-1 through 203-n and the speech data output from DTMF signal extracting instruction decoder 203-1, and replaces the input speech data with mute data or other data according to the input instruction signal and an instruction from controller 207. Volume controller 502 adjusts the volume level of the input speech data according to the input instruction signal and an instruction from controller 207. Instruction processors 401-2 through 401-n are structurally and functionally identical to instruction processor 401-1.

The other data referred to above represents data of white noise, BGM, or the like.

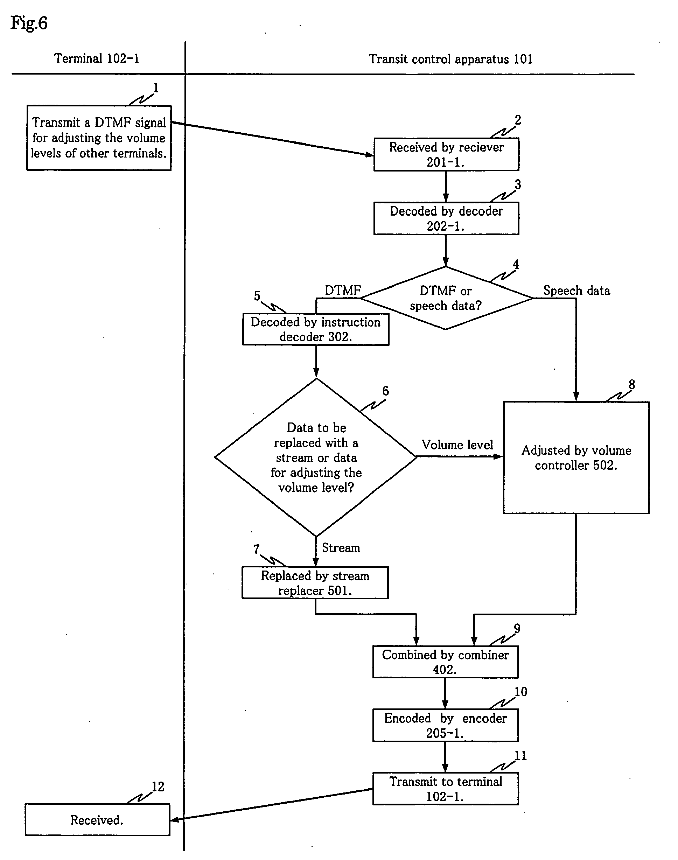

A multipoint conference method performed by the multipoint conference system according to the first embodiment will be described below with reference to Fig. 6.

In step 1, terminal 102-1 participating in a multipoint conference transmits a DTMF signal for adjusting the volume levels of other terminals 102-2 through 102-n in superimposed relation to a speech stream signal. Settings have been made in advance in the multipoint conference system to indicate how the volume levels of terminals 102-1 through 102-n can be adjusted by pressing which key of terminals 102-1 through 102-n, and such settings have been stored in controller 207.

The speech stream signal transmitted from terminal 102-1 is received by receiver 201-1 in transit control apparatus 101 in step 2. The received speech stream signal is output from receiver 201-1 to decoder 202-1, which decodes the speech stream signal into an internal input signal to be processed in transit control apparatus 101 in step 3.

The decoded internal input signal is output from decoder 202-1 to DTMF signal extracting instruction decoder 203-1. When the internal input signal is output to DTMF signal extracting instruction decoder 203-1, DTMF signal extractor 301 in DTMF signal extracting instruction decoder 203-1 determines whether the internal input signal represents ordinary speech data or a DTMF signal in step 4.

If it is judged that the internal input signal represents a DTMF signal in step 4, then it is output to instruction decoder 302, which decodes the DTMF signal into an instruction signal based on the settings in the controller 207 in step 5. The decoded instruction signal is output from DTMF signal extracting instruction decoder 203-1 to mixers 204-1 through 204-n. If it is judged that the internal input signal represents speech data in step 4, then the speech data is output to mixers 204-1 through 204-n. Speech data transmitted from other terminals 102-2 through 102-n are also processed in the same manner as with steps 2 through 5, and output to mixers 204-1 through 204-n.

The instruction signal and the speech data that are output to mixer 204-1 are input to instruction processors 401-1 through 401-n in mixer 204-1. In step 6, it is determined whether the speech data represents data to be replaced with a stream of mute data or other data, or data for adjusting the volume level of the input speech data, based on the input instruction signal.

If it is judged that the speech data represents data to be replaced with a stream of mute data or other data, then stream replacer 501 replaces the speech data with a stream of mute data or other data in step 7, and outputs the replaced data to combiner 402. If it is judged that the speech data represents volume level adjustment data, then volume controller 502 adjusts the volume level of the input speech data according to the instruction signal in step 8, and outputs the adjusted speech data to combiner 402.

Instruction signals transmitted from respective other terminals 102-2 through 102-n are also processed in the same manner as with steps 6 through 8. Based on the instruction signals transmitted from other terminals 102-2 through 102-n, the speech data is replaced with a stream of mute data or other data, or the volume level is adjusted, and the data are output to combiner 402.

The replaced data and the adjusted speech data are combined into an internal output signal by combiner 402 in step 9, and the internal output signal is output from combiner 402 to encoder 205-1.

In step 10, encoder 205-1 encodes the internal output signal into a speech stream signal, and outputs the speech stream signal to transmitter 206-1.

The speech stream signal output to transmitter 206-1 is transmitted therefrom to terminal 102-1 in step 11, and received by terminal 102-1 in step 12.

DTMF signal extracting instruction decoders 203-2 through 203-n perform the same processing sequence as DTMF signal extracting instruction decoder 203-1. Mixers 204-2 through 204-n also perform the same processing sequence as mixer 204-1.

### 2nd Embodiment:

According to the first embodiment, a DTMF signal is transmitted from a terminal and a volume level is adjusted according to the DTMF signal. According to a second embodiment, however, if no speech is detected in speech data transmitted from a terminal, the speech data may be processed.

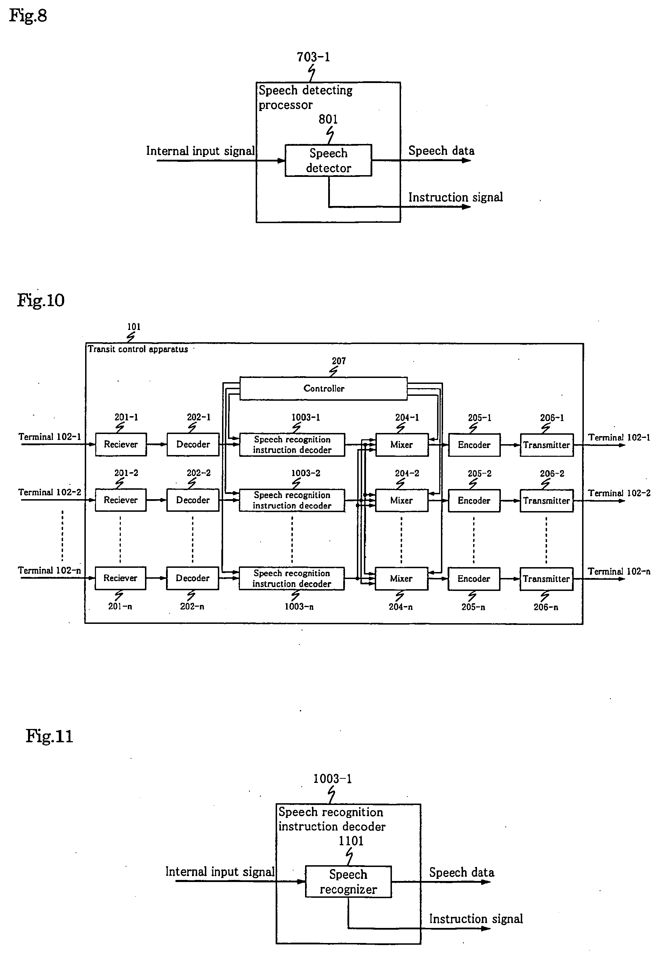

Fig. 7 shows in block form transit control apparatus 101 according to a second embodiment for use in the multipoint conference system shown in Fig. 1. Transit control apparatus 101 shown in Fig. 7 differs from transit control apparatus 101 shown in Fig. 2 in that DTMF signal extracting instruction decoders 203-1 through 203-n are replaced with speech detecting processors 703-1 through 703-n.

As shown in Fig. 8, speech detecting processor 703-1 comprises speech detector 801 for determining whether an internal input signal supplied thereto contains speech data or not. Speech detecting processors 703-2 through 703-n are structurally and functionally identical to speech detecting processor 703-1.

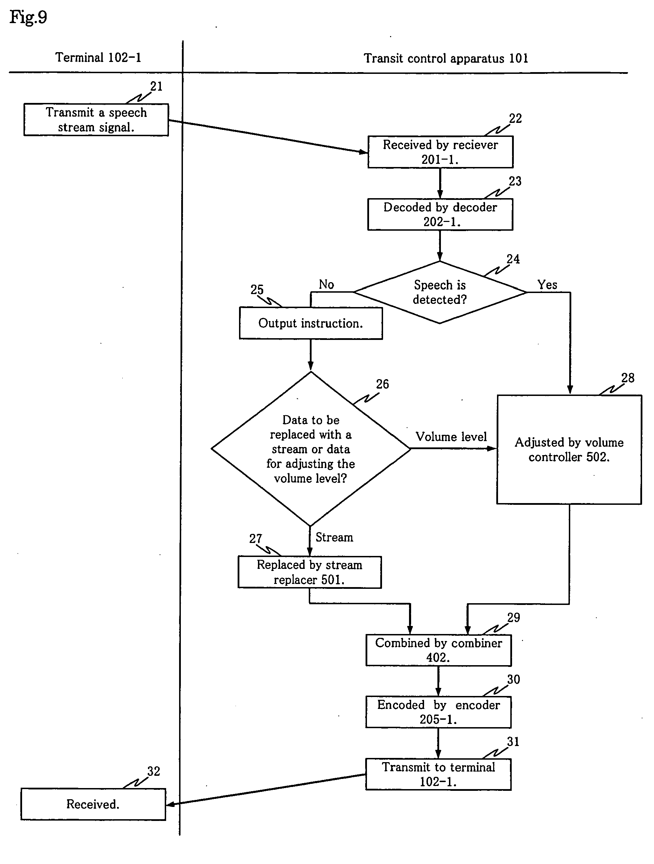

A multipoint conference method performed by the multipoint conference system according to the second embodiment will be described below with reference to Fig. 9.

In step 21, terminal 102-1 participating in a multipoint conference transmits a speech stream signal.

The speech stream signal transmitted from terminal 102-1 is received by receiver 201-1 in transit control apparatus 101 in step 22. The received speech stream signal is output from receiver 201-1 to decoder 202-1, which decodes the speech stream signal into an internal input signal to be processed in transit control apparatus 101 in step 23.

The decoded internal input signal is output from decoder 202-1 to speech detecting processor 703-1. In step 24, speech detector 801 in speech detecting processor 703-1 determines whether speech is detected in the internal input signal input to speech detecting processor 703-1 or not.

If speech detector 801 detects speech, then it outputs the speech to mixers 204-1 through 204-n. If speech detector 801 detects no speech, then an instruction that is preset in controller 207 is output from speech detector 801 as an instruction signal to mixers 204-1 through 204-n in step 25.

Speech data transmitted from other terminals 102-2 through 102-n are also processed in the same manner as with steps 22 through 25, and output to mixers 204-1 through 204-n.

The instruction signal and the speech data that are output to mixer 204-1 are input to instruction processors 401-1 through 401-n in mixer 204-1. In step 26, it is determined whether the speech data represents data to be replaced with a stream of mute data or other data, or data for adjusting the volume level of the input speech data, based on the input instruction signal.

If it is judged that the speech data represents data to be replaced with a stream of mute data or other data, then stream replacer 501 replaces the speech data with a stream of mute data or other data in step 27, and outputs the replaced data to combiner 402. If it is judged that the speech data represents volume level adjustment data, then volume controller 502 adjusts the volume level of the input speech data according to the instruction signal in step 28, and outputs the adjusted speech data to combiner 402.

Instruction signals transmitted from respective other terminals 102-2 through 102-n are also processed in the same manner as with steps 26 through 28. Based on the instruction signals transmitted from other terminals 102-2 through 102-n, the speech data is replaced with a stream of mute data or other data, or the volume level is adjusted, and the data are output to combiner 402.

The replaced data and the adjusted speech data are combined into an internal output signal by combiner 402 in step 29, and the internal output signal is output from combiner 402 to encoder 205-1.

In step 30, encoder 205-1 encodes the internal output signal into a speech stream signal, and outputs the speech stream signal to transmitter 206-1.

The speech stream signal output to transmitter 206-1 is transmitted therefrom to terminal 102-1 in step 31, and received by terminal 102-1 in step 32.

Speech detecting processors 703-2 through 703-n perform the same processing sequence as speech detecting processor 703-1. Mixers 204-2 through 204-n also perform the same processing sequence as mixer 204-1.

### 3rd Embodiment:

According to the first embodiment, a DTMF signal is transmitted from a terminal and a volume level is adjusted according to the DTMF signal. According to a third embodiment, however, certain speech data sent from a terminal is used to represent an instruction to adjust the volume level of speech data.

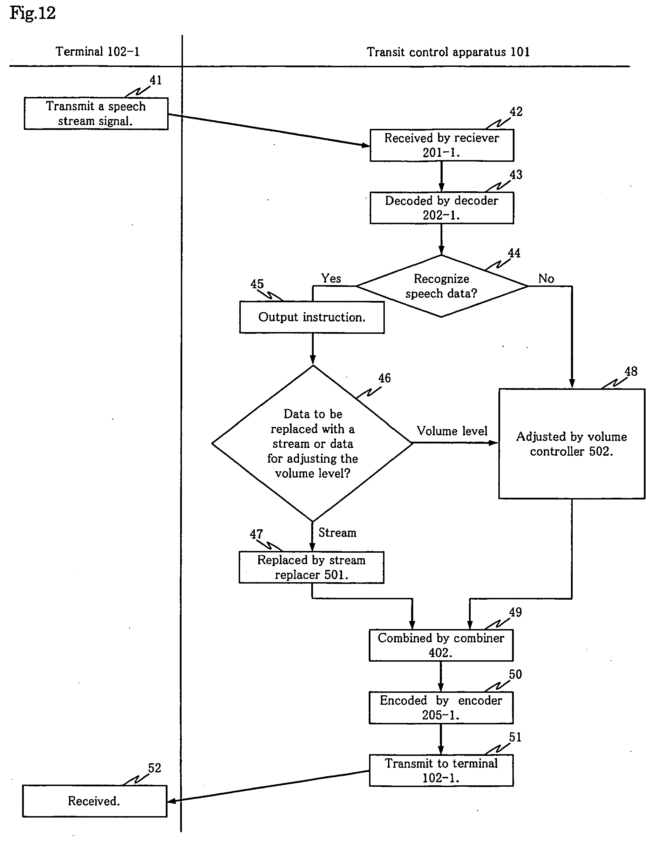

Fig. 10 shows in block form transit control apparatus 101 according to a third embodiment for use in the multipoint conference system shown in Fig. 1. Transit control apparatus 101 shown in Fig. 10 differs from transit control apparatus 101 shown in Fig. 2 in that DTMF signal extracting instruction decoders 203-1 through 203-n are replaced with speech recognition instruction decoders 1003-1 through 1003-n.

As shown in Fig. 11, speech recognition instruction decoder 1003-1 comprises speech, recognizer 1101. Speech recognizer 1101 recognizes the speech of an internal input signal that is supplied thereto and converts certain speech into an instruction signal. Speech recognition instruction decoders 1003-2 through 1003-n are structurally and functionally identical to speech recognition instruction decoder 1003-1.

A multipoint conference method performed by the multipoint conference system according to the third embodiment will be described below with reference to Fig. 12.

In step 41, terminal 102-1 participating in a multipoint conference transmits a speech stream signal.

The speech stream signal transmitted from terminal 102-1 is received by receiver 201-1 in transit control apparatus 101 in step 42. The received speech stream signal is output from receiver 201-1 to decoder 202-1, which decodes the speech stream signal into an internal input signal to be processed in transit control apparatus 101 in step 43.

The decoded internal input signal is output from decoder 202-1 to speech recognition instruction processor 1003-1. In step 44, speech recognizer 1101 in speech recognition instruction processor 1003-1 recognizes speech data. If it is judged that the speech data is recognized as speech preset as an instruction in controller 207, then the speech data is converted into an instruction signal, which is output to mixers 204-1 through 204-n in step 45. For example, if the speech data is recognized as "LOWER", then it is converted into an instruction signal for reducing the volume level, and the instruction signal is output.

Speech data not converted into an instruction signal by speed recognizer 1101 is also output to mixers 204-1 through 204-n.

Speech data transmitted from other terminals 102-2 through 102-n are also processed in the same manner as with steps 42 through 45, and output to mixers 204-1 through 204-n.

The instruction signal and the speech data that are output to mixer 204-1 are input to instruction processors 401-1 through 401-n in mixer 204-1. In step 46, it is determined whether the speech data represents data to be replaced with a stream of mute data or other data, or data for adjusting the volume level of the input speech data, based on the input instruction signal.

If it is judged that the speech data represents data to be replaced with a stream of mute data or other data, then stream replacer 501 replaces the speech data with a stream of mute data or other data in step 47, and outputs the replaced data to combiner 402. If it is judged that the speech data represents volume level adjustment data, then volume controller 502 adjusts the volume level of the input speech data according to the instruction signal in step 48, and outputs the adjusted speech data to combiner 402.

Instruction signals transmitted from respective other terminals 102-2 through 102-n are also processed in the same manner as with steps 46 through 48. Based on the instruction signals transmitted from other terminals 102-2 through 102-n, the speech data is replaced with a stream of mute data or other data, or the volume level is adjusted, and the data are output to combiner 402.

The replaced data and the adjusted speech data are combined into an internal output signal by combiner 402 in step 49, and the internal output signal is output from combiner 402 to encoder 205-1.

In step 50, encoder 205-1 encodes the internal output signal into a speech stream signal, and outputs the speech stream signal to transmitter 206-1.

The speech stream signal output to transmitter 206-1 is transmitted therefrom to terminal 102-1 in step 51, and received by terminal 102-1 in step 52.

Speech recognition instruction decoders 1003-2 through 1003-n perform the same processing sequence as speech recognition instruction decoder 1003-1. Mixers 204-2 through 204-n also perform the same processing sequence as mixer 204-1.

### 4th Embodiment:

According to the first embodiment, a DTMF signal is transmitted from a terminal and a volume level is adjusted according to the DTMF signal. According to a fourth embodiment, however, the volume level of speech data is automatically adjusted based on a change in the volume level from a terminal.

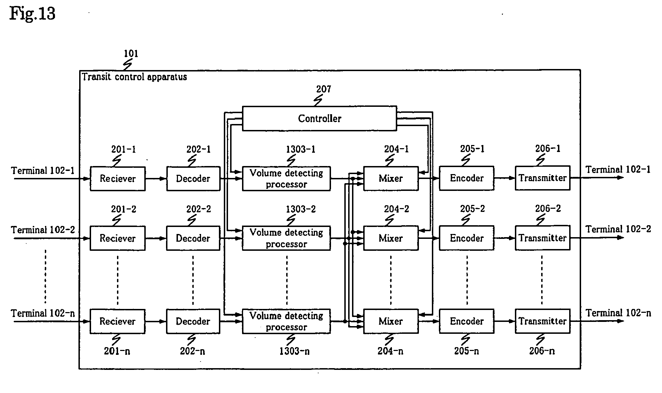

Fig. 13 shows in block form transit control apparatus 101 according to a fourth embodiment for use in the multipoint conference system shown in Fig. 1. Transit control apparatus 101 shown in Fig. 13 differs from transit control apparatus 101 shown in Fig. 2 in that DTMF signal extracting instruction decoders 203-1 through 203-n are replaced with volume detecting processors 1303-1 through 1303-n.

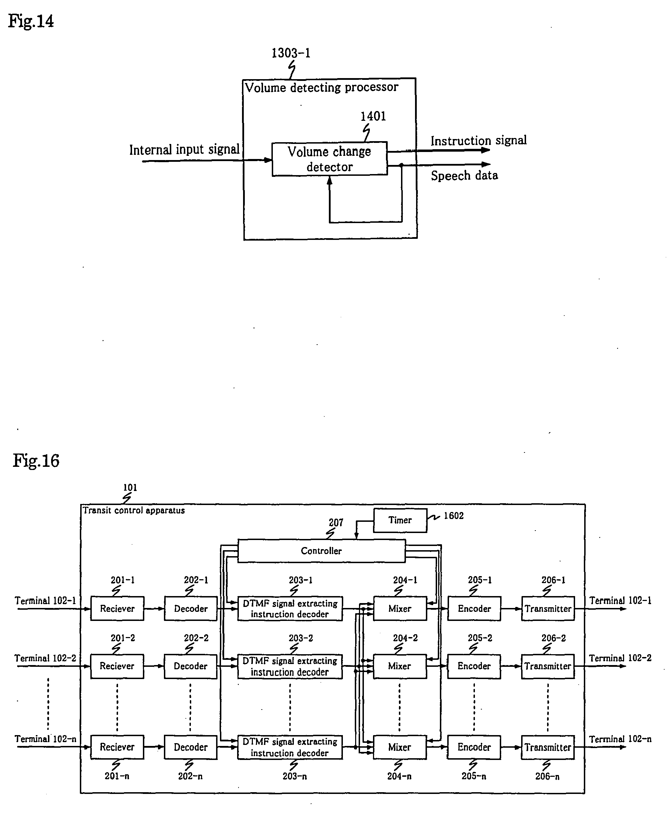

As shown in Fig. 14, volume detecting processor 1303-1 illustrated in Fig. 13 comprises volume change detector 1401. Volume change detector 1401 detects the volume level of speech data represented by an internal input signal supplied thereto, calculates the difference between the detected volume level and the volume level of preceding speech data, and outputs an instruction for adjusting the volume level of the speech data based on the calculated difference. Volume detecting processors 1303-2 through 1303-n are structurally and functionally identical to volume detecting processors 1303-1.

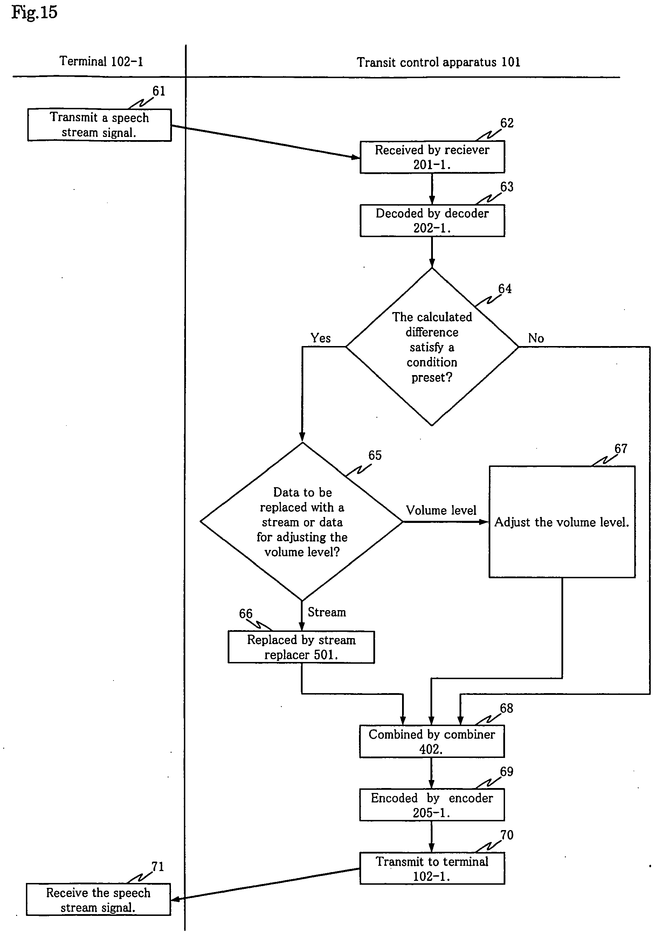

A multipoint conference method performed by the multipoint conference system according to the fourth embodiment will be described below with reference to Fig. 15.

In step 61, terminal 102-1 participating in a multipoint conference transmits a speech stream signal.

The speech stream signal transmitted from terminal 102-1 is received by receiver 201-1 in transit control apparatus 101 in step 62. The received speech stream signal is output from receiver 201-1 to decoder 202-1, which decodes the speech stream signal into an internal input signal to be processed in transit control apparatus 101 in step 63.

The decoded internal input signal is output from decoder 202-1 to volume detecting processor 1303-1. In step 64, volume change detector 1401 in volume detecting processor 1303-1 detects a volume level. Volume change detector 1401 calculates the difference between the calculated volume level and the volume level of preceding speech data, and determines whether the calculated difference satisfy a condition preset in controller 207 or not in step 64.

If it is judged that the difference detected by volume change detector 1401 satisfies the condition preset in controller 207, then an instruction signal converted based on the condition and the speech data are output to mixers 204-1 through 204-n.

If it is judged that the difference detected by volume change detector 1401 does not satisfy the condition preset in controller 207, then the speech data is output to mixers 204-1 through 204-n.

Speech data transmitted from other terminals 102-2 through 102-n are also processed in the same manner as with steps 62 through 64, and output to mixers 204-1 through 204-n.

The instruction signal and the speech data that are output to mixer 204-1 are input to instruction processors 401-1 through 401-n in mixer 204-1. In step 65, it is determined whether the speech data represents data to be replaced with a stream of mute data or other data, or data for adjusting the volume level of the input speech data, based on the input instruction signal.

If it is judged that the speech data represents data to be replaced with a stream of mute data or other data, then stream replacer 501 replaces the speech data with a stream of mute data or other data in step 66, and outputs the replaced data to combiner 402. If it is judged that the speech data represents volume level adjustment data, then volume controller 502 adjusts the volume level of the input speech data according to the instruction signal in step 67, and outputs the adjusted speech data to combiner 402.

Speech data which is judged as not satisfying the condition is not adjusted in volume level, and is output to combiner 402.

Instruction signals transmitted from respective other terminals 102-2 through 102-n are also processed in the same manner as with steps 65 through 67. Based on the instruction signals transmitted from other terminals 102-2 through 102-n, the speech data is replaced with a stream of mute data or other data, or the volume level is adjusted, and the data are output to combiner 402.

The replaced data, the adjusted speech data, and the speech data which is judged as not satisfying the condition and hence is not adjusted in volume level are combined into an internal output signal by combiner 402 in step 68, and the internal output signal is output from combiner 402 to encoder 205-1.

In step 69, encoder 205-1 encodes the internal output signal into a speech stream signal, and outputs the speech stream signal to transmitter 206-1.

The speech stream signal output to transmitter 206-1 is transmitted therefrom to terminal 102-1 in step 70, and received by terminal 102-1 in step 71.

Volume detecting processors 1303-2 through 1303-n perform the same processing sequence as volume detecting processor 1303-1. Mixers 204-2 through 204-n also perform the same processing sequence as mixer 204-1.

### 5th Embodiment:

According to a fifth embodiment, an arrangement for limiting a period of time for adjusting a volume level is added to the multipoint conference system according to the first embodiment.

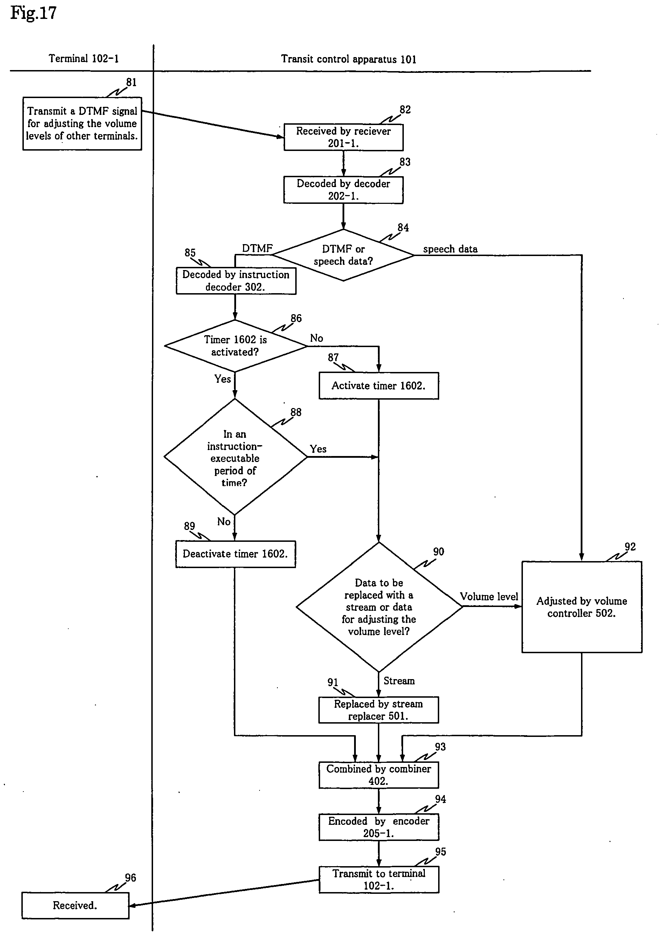

Fig. 16 shows in block form transit control apparatus 101 according to a fifth embodiment for use in the multipoint conference system shown in Fig. 1. Transit control apparatus 101 shown in Fig. 16 differs from transit control apparatus 101 shown in Fig. 2 in that it additionally has timer 1602 connected to controller 207 for controlling a volume level.

A multipoint conference method performed by the multipoint conference system according to the fifth embodiment will be described below with reference to Fig. 17.

In step 81, terminal 102-1 participating in a multipoint conference transmits a DTMF signal for adjusting the volume levels of other terminals 102-2 through 102-n in superimposed relation to a speech stream signal. Settings have been made in advance in the multipoint conference system to indicate how the volume levels of terminals 102-1 through 102-n can be adjusted by pressing which key of terminals 102-1 through 102-n, and such settings have been stored in controller 207.

The speech stream signal transmitted from terminal 102-1 is received by receiver 201-1 in transit control apparatus 101 in step 82. The received speech stream signal is output from receiver 201-1 to decoder 202-1, which decodes the speech stream signal into an internal input signal to be processed in transit control apparatus 101 in step 83.

The decoded internal input signal is output from decoder 202-1 to DTMF signal extracting instruction decoder 203-1. When the internal input signal is output to DTMF signal extracting instruction decoder 203-1, DTMF signal extractor 301 in DTMF signal extracting instruction decoder 203-1 determines whether the internal input signal represents ordinary speech data or a DTMF signal in step 84.

If it is judged that the internal input signal represents a DTMF signal in step 4, then it is output to instruction decoder 302, which decodes the DTMF signal into an instruction signal based on the settings in the controller 207 in step 85. The decoded instruction signal is output from DTMF signal extracting instruction decoder 203-1 to mixers 204-1 through 204-n. If it is judged that the internal input signal represents speech data in step 84, then the speech data is output to mixers 204-1 through 204-n. Speech data transmitted from other terminals 102-2 through 102-n are also processed in the same manner as with steps 82 through 85, and output to mixers 204-1 through 204-n.

The instruction signal and the speech data that are output to mixer 204-1 are input to instruction processors 401-1 through 401-n in mixer 204-1.

In step 86, it is determined whether timer 1602, which determines whether the present time is in a period of time for executing an instruction based on the supplied instruction signal or not, is activated or not. If it is judged that timer 1602 is not activated, controller 207 activates timer 1602 in step 87.

If it is judged that timer 1602 is activated, then it is determined in step 88 whether the instruction is in a predetermined instruction-executable period of time or not. If it is judged that the instruction is not in the instruction-executable period of time, then timer 1602 is deactivated in step 89, and the supplied speech data is directly output to combiner 402.

If it is judged in step S88 that the instruction is in the instruction-executable period of time, then it is determined in step 90 whether the speech data represents data to be replaced with a stream of mute data or other data, or data for adjusting the volume level of the input speech data, based on the input instruction signal.

If it is judged that the speech data represents data to be replaced with a stream of mute data or other data, then stream replacer 501 replaces the speech data with a stream of mute data or other data in step 91, and outputs the replaced data to combiner 402. If it is judged that the speech data represents volume level adjustment data, then volume controller 502 adjusts the volume level of the input speech data according to the instruction signal in step 92, and outputs the adjusted speech data to combiner 402.

Instruction signals transmitted from respective other terminals 102-2 through 102-n are also processed in the same manner as with steps 90 through 92. Based on the instruction signals transmitted from other terminals 102-2 through 102-n, the speech data is replaced with a stream of mute data or other data, or the volume level is adjusted, and the data are output to combiner 402.

The replaced data, the adjusted speech data, and the speech data that is output as it is because the instruction is not in the instruction-executable period of time are combined into an internal output signal by combiner 402 in step 93, and the internal output signal is output from combiner 402 to encoder 205-1.

In step 94, encoder 205-1 encodes the internal output signal into a speech stream signal, and outputs the speech stream signal to transmitter 206-1.

The speech stream signal output to transmitter 206-1 is transmitted therefrom to terminal 102-1 in step 95, and received by terminal 102-1 in step 96.

DTMF signal extracting instruction decoders 203-2 through 203-n perform the same processing sequence as DTMF signal extracting instruction decoder 203-1. Mixers 204-2 through 204-n also perform the same processing sequence as mixer 204-1.

Timer 1602 according to the fifth embodiment is also applicable to transit control apparatus 101 according to the first through fourth embodiments.

### 6th Embodiment:

According to a sixth embodiment, an arrangement for notifying a terminal of an adjusted volume level is added to the multipoint conference system according to the first embodiment.

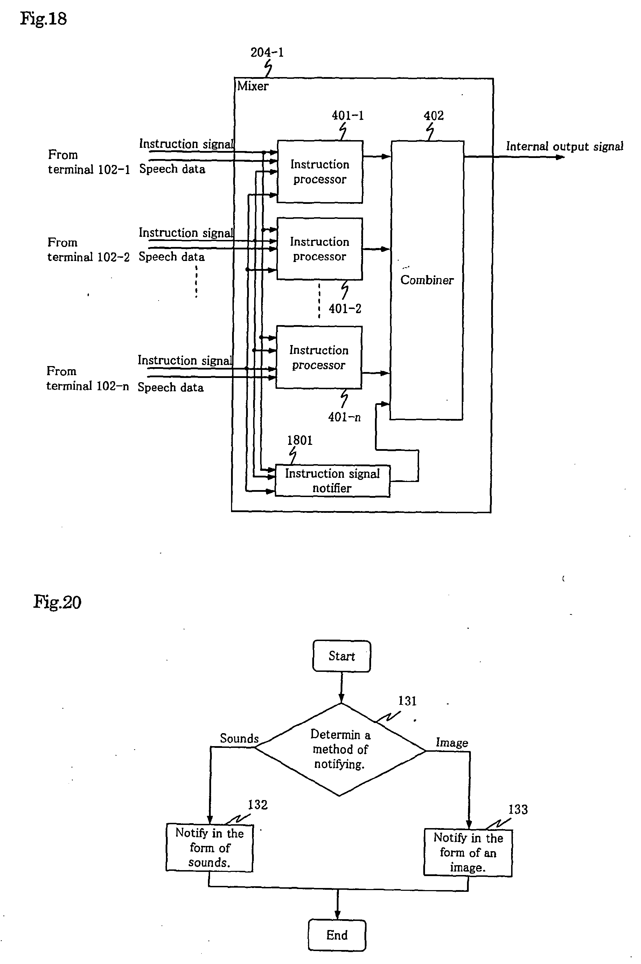

Fig. 18 shows in block form mixer 204-1 in a transit control apparatus according to a sixth embodiment for use in the multipoint conference system shown in Figs. 1 and 2. Mixer 204-1 comprises a plurality of instruction processors 401-1 through 401-n, instruction signal notifier 1801, and combiner 402. Instruction processors 401-1 through 401-n adjust the volume levels of speech data of the respective terminals according to the instruction signals output from respective DTMF signal extracting instruction decoders 203-1 through 203-n in transit control apparatus 101 shown in Fig. 2, and output the adjusted speech data. Instruction signal notifier 1801 is supplied with instruction signals output from DTMF signal extracting instruction decoders 203-1 through 203-n, converts the supplied instruction signals into volume adjustment signals in a format preset in controller 207 in transit control apparatus 101 shown in Fig. 2, and outputs the volume adjustment signals to notify terminal 102-1 of adjusted volume levels. Combiner 402 combines the speech data output from instruction processors 401-1 through 401-n and the volume adjustment signals output from instruction signal notifier 1801 into an internal output signal, and outputs the internal output signal. The volume adjustment signals are transmitted in superimposed relation to the speech signals. Mixers 204-2 through 204-n are structurally and functionally identical to mixer 204-1.

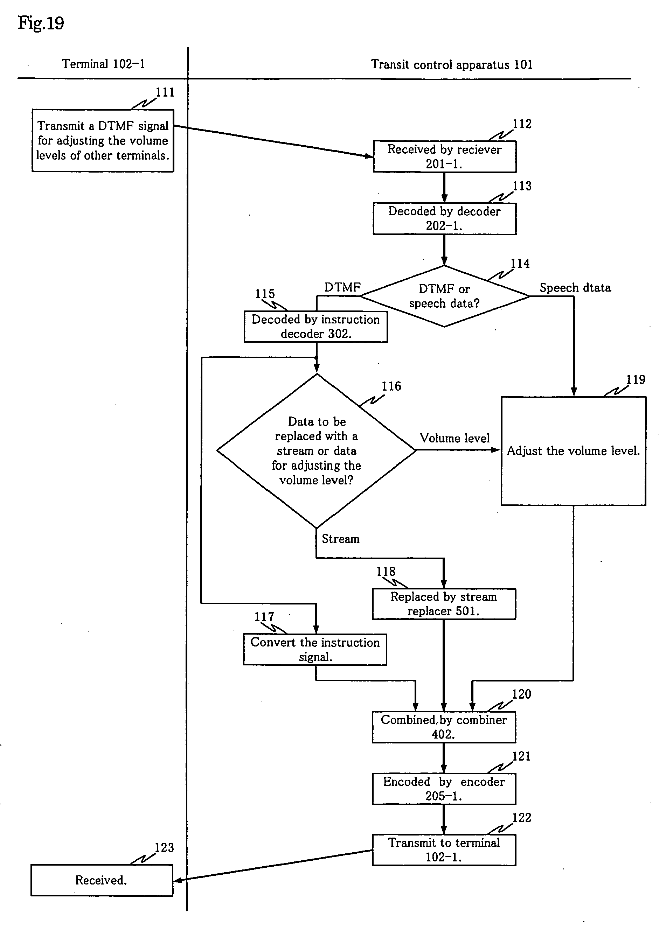

A multipoint conference method performed by the multipoint conference system according to the sixth embodiment will be described below with reference to Fig. 19.

In step 111, terminal 102-1 participating in a multipoint conference transmits a DTMF signal for adjusting the volume levels of other terminals 102-2 through 102-n in superimposed relation to a speech stream signal. Settings have been made in advance in the multipoint conference system to indicate how the volume levels of terminals 102-1 through 102-n can be adjusted by pressing which key of terminals 102-1 through 102-n, and such settings have been stored in controller 207.

The speech stream signal transmitted from terminal 102-1 is received by receiver 201-1 in transit control apparatus 101 in step 112. The received speech stream signal is output from receiver 201-1 to decoder 202-1, which decodes the speech stream signal into an internal input signal to be processed in transit control apparatus 101 in step 113.

The decoded internal input signal is output from decoder 202-1 to DTMF signal extracting instruction decoder 203-1. When the internal input signal is output to DTMF signal extracting instruction decoder 203-1, DTMF signal extractor 301 in DTMF signal extracting instruction decoder 203-1 determines whether the internal input signal represents ordinary speech data or a DTMF signal in step 114.

If it is judged that the internal input signal represents a DTMF signal in step 114, then it is output to instruction decoder 302, which decodes the DTMF signal into an instruction signal based on the settings in the controller 207 in step 115. The decoded instruction signal is output from DTMF signal extracting instruction decoder 203-1 to mixers 204-1 through 204-n. If it is judged that the internal input signal represents speech data in step 114, then the speech data is output to mixers 204-1 through 204-n. Speech data transmitted from other terminals 102-2 through 102-n are also processed in the same manner as with steps 112 through 115, and output to mixers 204-1 through 204-n.

The instruction signal and the speech data that are output to mixer 204-1 are input to instruction processors 401-1 through 401-n in mixer 204-1. In step 116, it is determined whether the speech data represents data to be replaced with a stream of mute data or other data, or data for adjusting the volume level of the input speech data, based on the input instruction signal.

Each instruction signal is input to instruction signal notifier 1801 in mixer 204-1. In step 117, instruction signal notifier 1801 converts the instruction signal into a format for notifying terminal 102-1 of an adjusted volume level based on the instruction signal, and outputs it as a volume adjustment signal to combiner 402.

If it is judged that the speech data represents data to be replaced with a stream of mute data or other data, then stream replacer 501 replaces the speech data with a stream of mute data or other data in step 118, and outputs the replaced data to combiner 402. If it is judged that the speech data represents volume level adjustment data, then volume controller 502 adjusts the volume level of the input speech data according to the instruction signal in step 119, and outputs the adjusted speech data to combiner 402.

Instruction signals transmitted from respective other terminals 102-2 through 102-n are also processed in the same manner as with steps 116, 118, 119. Based on the instruction signals transmitted from other terminals 102-2 through 102-n, the speech data is replaced with a stream of mute data or other data, or the volume level is adjusted, and the data are output to combiner 402.

The volume adjustment signal, the replaced data, and the adjusted speech data are combined into an internal output signal by combiner 402 in step 120, and the internal output signal is output from combiner 402 to encoder 205-1.

In step 121, encoder 205-1 encodes the internal output signal into a speech stream signal, and outputs the speech stream signal to transmitter 206-1.

The speech stream signal output to transmitter 206-1 is transmitted therefrom to terminal 102-1 in step 122, and received by terminal 102-1 in step 123.

DTMF signal extracting instruction decoders 203-2 through 203-n perform the same processing sequence as DTMF signal extracting instruction decoder 203-1. Mixers 204-2 through 204-n also perform the same processing sequence as mixer 204-1.

The process of notifying a terminal of an adjusted volume level in step 117 will be described in detail below.

In the above embodiment, terminal 102-1 is notified of the present adjusted volume level in the form of speech. For example, if terminal 102-1 is in a mute mode, instruction signal notifier 1801 converts an instruction signal representing the mute mode into a particular sound such as a blip. The particular sound is combined with ordinary speech data by combiner 402, and transmitted to notify terminal 102-1 of the present adjusted volume level. Instead of a particular sound, a music melody may be combined and transmitted.

Several types of sounds or music melodies may also be employed for notifying terminal 102-1 of the adjusted volume level of its own, but also of the adjusted sound levels of other terminals 102-2 through 102-n which have been set by terminal 102-1, or the adjusted sound level of terminal 102-1 which has been set by other terminals 102-2 through 102-n.

If terminal 102-1 is to be notified of many adjusted volume levels in the form of sounds, then those many adjusted volume levels cannot easily be distinguished from each other. In such a case, terminal 102-1 may be notified of adjusted volume levels in the form of video images.

For example, if each of terminals 102-1 through 102-n has a video streaming function, then the adjusted volume level of each terminals 102-1 through 102-n is indicated as an icon, a character string, a symbol, or the like displayed in part of the screen. The icon, the character string, the symbol, or the like may be displayed as a semitransparent image.

Alternatively, a certain threshold may be established, and if a volume level is greater than the threshold, then part of the screen may be brightened, and if a volume level is smaller than the threshold, then part of the screen may be darkened. In this manner, an adjusted volume level may be indicated as a change in the luminance.

Notification by way of images allows more information to be displayed than notification by way of sounds. Therefore, the adjusted volume level set by terminal 102-1 and also the adjusted volume levels set by other terminals 102-2 through 102-n can be indicated. As a result, the adjusted volume levels in the form of images can be recognized more easily at terminals 102-1 through 102-n than the adjusted volume levels in the form of sounds.

A processing sequence for determining a method of notifying a terminal of an adjusted volume level with controller 207 in transit control apparatus 101 shown in Fig. 2 will be described below with reference to Fig. 20.

In step 131, controller 207 determines a method of notifying each of terminals 102-1 through 102-n of an adjusted volume level. Specifically, a program for determining such a method depending on a terminal to be notified or the number of connected terminals may be stored in controller 207, and controller 207 may determine the method according to the program. Alternatively, a notifying method applied for in advance by each of terminals 102-1 through 102-n may be set in controller 207, and controller 207 may determine a notifying method according to the setting.

If controller 207 judges that the method represents notification by way of sounds, then a terminal is notified of an adjusted volume level in the form of sounds in step 132. If controller 207 judges that the method represents notification by way of an image, then a terminal is notified of an adjusted volume level in the form of an image in step 133.

Furthermore, both notification by way of sounds and notification by way of an image may performed at the same time.

Mixer 204-1 according to the present embodiment is also applicable to transit control apparatus 101 according to the first through fifth embodiments.

In the multipoint conference methods according to the first through sixth embodiments, terminal 102-1 adjusts the volume levels of other terminals 102-2 through 102-n. In addition, terminals may make settings for each other, e.g., terminal 102-2 may make settings for terminals 102-1, 102-3 through 102-n. Furthermore, each of terminals 102-1 through 102-n may adjust a volume level of speech output to its own terminal or other terminals.

While preferred embodiments of the present invention have been described using specific terms, such description is for illustrative purposes only, and it is to be understood that changes and variations may be made without departing from the spirit or scope of the following claims.

## Claims

1. A transit control apparatus comprising:
DTMF signal extracting means for extracting a DTMF signal from speech data transmitted from a plurality of terminals participating in a multipoint conference;
instruction decoding means for decoding the DTMF signal extracted by said DTMF signal extracting means into an instruction; and
volume control means for adjusting the volume level of speech data of said terminals based on said instruction decoded by said instruction decoding means;
wherein said terminals are connected to each other for relaying and controlling the speech data.

2. A transit control apparatus according to claim 1, wherein said volume control means adjusts the volume level of speech data, from which a DTMF signal has been extracted, output from at least one terminal participating in the multipoint conference, other than the terminals transmitting the speech data from which the DTMF signal has been extracted.

3. A transit control apparatus according to claim 1 or 2, further comprising:
adjusted volume level notifying means for notifying said terminals of the instruction decoded by said instruction decoding means as an adjusted volume level.

4. A transit control apparatus comprising:
speech detecting means for detecting speech from speech data transmitted from a plurality of terminals participating in a multipoint conference, and outputting an instruction for adjusting a volume level if no speech is detected from the speech data; and
volume control means for adjusting the volume level of speech data of said terminals based on the instruction output from said speech detecting means;
wherein said terminals are connected to each other for relaying and controlling the speech data.

5. A transit control apparatus according to claim 4, wherein said volume control means adjusts the volume level of speech data, from which speech has been detected, output from at least one terminal participating in the multipoint conference, other than the terminals transmitting the speech data from which speech has been detected.

6. A transit control apparatus according to claim 4 or 5, further comprising:
adjusted volume level notifying means for notifying said terminals of the instruction output from said speech detecting means as an adjusted volume level.

7. A transit control apparatus comprising:
speech recognizing means for recognizing an instruction from speech data transmitted from a plurality of terminals participating in a multipoint conference; and
volume control means for adjusting the volume level of speech data of said terminals based on the instruction recognized by said speech recognizing means;
wherein said terminals are connected to each other for relaying and controlling the speech data.

8. A transit control apparatus according to claim 7, wherein said volume control means adjusts the volume level of speech data, from which an instruction has been recognized, output from at least one terminal participating in the multipoint conference, other than the terminals transmitting the speech data from which an instruction has been recognized.

9. A transit control apparatus according to claim 7 or 8, further comprising:
adjusted volume level notifying means for notifying said terminals of the instruction recognized by said speech recognizing means as an adjusted volume level.

10. A transit control apparatus comprising:
volume change detecting means for detecting the volume level of speech data transmitted from a plurality of terminals participating in a multipoint conference, calculating the difference between the detected volume level and a previously detected volume level of speech data, and outputting an instruction for adjusting a volume level based on the calculated difference; and
volume control means for adjusting the volume level of speech data of said terminals based on the instruction output from said volume change detecting means;
wherein said terminals are connected to each other for relaying and controlling the speech data.

11. A transit control apparatus according to claim 16, wherein said volume control means adjusts the volume level of speech data, which has been detected and whose difference from the previously detected volume level of speech data has been calculated, output from at least one terminal participating in the multipoint conference, other than the terminals transmitting the speech data which has been detected and whose difference from the previously detected volume level of speech data has been calculated.

12. A transit control apparatus according to claim 11 or 12, further comprising:
adjusted volume level notifying means for notifying said terminals of the instruction recognized by said volume change detecting means as an adjusted volume level.

13. A transit control apparatus according to any one of claims 1 to 12, further comprising:
a timer for limiting a period of time in which said volume control means adjusts the volume level.

14. A transit control apparatus according to claim 3, 6, 9, 12 or 13 as dependent on claim 3, 6, 9 or 12, wherein said adjusted volume level notifying means notifies said terminals of the adjusted volume level by way of a sound or an image.

15. A multipoint conference system comprising:
a plurality of terminals participating in a multipoint conference; and
a transit control apparatus according to any one of claims 1 to 14 for connecting said terminals to each other for relaying and controlling speech data.

16. A method of relaying speech data in a transit control apparatus connected to a plurality of terminals participating in a multipoint conference, said speech data being transmitted from said terminals, comprising the steps of:
receiving speech data from said terminals and extracting a DTMF signal from the speech data;
decoding the extracted DTMF signal into an instruction; and
adjusting the volume level of speech data of said terminals based on the decoded instruction.

17. A method according to claim 16, further comprising the step of:
adjusting the volume level of speech data, from which a DTMF-signal has been extracted, output from at least one terminal participating in the multipoint conference, other than the terminals transmitting the speech data from which the DTMF signal has been extracted.

18. A method of relaying speech data in a transit control apparatus connected to a plurality of terminals participating in a multipoint conference, said speech data being transmitted from said terminals, comprising the steps of:
detecting speech from speech data transmitted from said terminals, and outputting an instruction for adjusting a volume level if no speech is detected from the speech data; and
adjusting the volume level of speech data of said terminals based on the output instruction.

19. A method according to claim 18, further comprising the step of:
adjusting the volume level of speech data, from which speech has been detected, output from at least one terminal participating in the multipoint conference, other than the terminals transmitting the speech data from which speech has been detected.

20. A method of relaying speech data in a transit control apparatus connected to a plurality of terminals participating in a multipoint conference, said speech data being transmitted from said terminals, comprising the steps of:
recognizing an instruction from speech data transmitted from said terminals; and
adjusting the volume level of speech data of said terminals based on the recognized instruction.

21. A method according to claim 20, further comprising the step of:
adjusting the volume level of speech data, from which an instruction has been recognized, output from at least one terminal participating in the multipoint conference, other than the terminals transmitting the speech data from which an instruction has been recognized.

22. A method of relaying speech data in a transit control apparatus connected to a plurality of terminals participating in a multipoint, conference, said speech data being transmitted from said terminals, comprising the steps of:
detecting the volume level of speech data transmitted from said terminals, calculating the difference between the detected volume level and a previously detected volume level of speech data, and outputting an instruction for adjusting a volume level based on the calculated difference; and
adjusting the volume level of speech data of said terminals based on the output instruction.

23. A method according to claim 22, further comprising the step of:
adjusting the volume level of speech data, which has been detected and whose difference from the previously detected volume level of speech data has been calculated, output from at least one terminal participating in the multipoint conference, other than the terminals transmitting the speech data which has been detected and whose difference from the previously detected volume level of speech data has been calculated.

24. A method according to any one of claims 16 to 23, further comprising the step of:
limiting a period of time in which said volume level is adjusted.

25. A method according to any one of claims 16 to 24, further comprising the step of:
notifying said terminals of said instruction as an adjusted volume level.

26. A method according to claim 25, further comprising the step of:
notifying said adjusted volume level by way of a sound or an image.
